# EUROPÄISCHE PATENTSCHRIFT

(11) **EP 3 725 149 B1**
(45) Veröffentlichungstag und Bekanntmachung des Hinweises auf die Patenterteilung: **29.12.2021**
(21) Anmeldenummer: 20151423.9
(22) Anmeldetag: 13.01.2020
(51) Int. Cl.: A01D 67/00, A01D 43/08, A01D 34/00, B62D 33/06, B62D 7/15, B62D 12/02, B60K 35/00

(54) **SCHWENKKRAFTHEBER**
PIVOTING POWER LIFTER
LEVIER À FORCE DE PIVOTEMENT

(30) Priorität: 09.04.2019 DE 102019109305
(43) Veröffentlichungstag der Anmeldung: 21.10.2020
(73) Patentinhaber: CLAAS Selbstfahrende Erntemaschinen GmbH, 33428 Harsewinkel (DE)
(72) Erfinder: Teipel, Fabian, 49080 Osanbrück (DE); Breitkopf, Jürgen, 48163 Münster (DE); Schütze, Lars, 59302 Oelde (DE)
(74) Vertreter: CLAAS Gruppe

(56) Entgegenhaltungen:
- DE-A1-102006 046 646
- DE-A1-102013 006 464
- US-A1- 2018 309 962

## Beschreibung

### Schwenkkraftheber

Die Erfindung betrifft eine Anzeigeeinheit für eine landwirtschaftliche Arbeitsmaschine mit einer schwenkbaren Adaptionsvorrichtung.
Eine Anzeige für eine landwirtschaftliche Arbeitsmaschine mit einer schwenkbaren Adaptionsvorrichtung ist aus der DE102006046646A1 bekannt.

Nachteilig am Stand der Technik ist, dass sie nur für einfache landwirtschaftliche Arbeitsmaschinen geeignet ist.

Aufgabe der Erfindung ist es die Anzeige für weitere Arbeitsmaschinen anzupassen, insbesondere an Arbeitsmaschinen mit Hundeganglenkung. Bei genutztem Hundegang ist der Schwenkbereich für das Anbaugerät asymmetrisch. Schäden bei überdrehen der Adaptionsvorrichtung möglich.

Anzeigeeinheit mit Anzeigefeld zur Visualisierung von Fahrzeuginformationen für den Einsatz in landwirtschaftlichen Arbeitsfahrzeugen,
wobei das Arbeitsfahrzeug eine schwenkbare Adaptionsvorrichtung umfasst,
wobei die Anzeigeeinheit dazu ausgestattet ist im Anzeigefeld einen aktuellen Schwenkwinkel der Adaptionsvorrichtung zu visualisieren,
dadurch gekennzeichnet, dass das Arbeitsfahrzeug mit einer Hundeganglenkung ausgestattet ist,
wobei die Anzeigeeinheit dazu ausgestattet ist im Anzeigefeld einen möglichen Schwenkbereich der Adaptionsvorrichtung in Abhängigkeit vom aktuellen Hundegangwinkel der Hundeganglenkung zu visualisieren.

Der Hundegangwinkel gibt dabei den Winkel zwischen der Ausrichtung der Arbeitsmaschine und der Fahrrichtung an. Der Schwenkwinkel gibt den Winkel zwischen der Ausrichtung der Arbeitsmaschine und der Ausrichtung der Adaptionsvorrichtung an. Der Winkel zwischen der Fahrrichtung und der Ausrichtung der Adaptionsvorrichtung ergibt sich folglich als Differenz zwischen Hundegangwinkel und Schwenkwinkel.

Vorteilhaft an der Erfindung ist, dass der Fahrer bei genutztem Hundegang sehr leicht erkennen kann in welche Richtung ein Schwenken der Adaptionsvorrichtung in welche Richtung möglich ist.

In einer bevorzugten Ausführungsform ist die Adaptionsvorrichtung als Schwenkkraftheber ausgeführt.

In einer bevorzugten Ausführungsform ist die Anzeigeeinheit dazu ausgestattet im Anzeigefeld den aktuellen Hundegangwinkel der Hundeganglenkung zu visualisieren

Vorteilhaft an der Erfindung ist, dass Fahrer sehr leicht erkennen kann wie sich der aktuelle Hundegangwinkel den Schwenkbereich beeinflusst.

In einer bevorzugten Ausführungsform ist die Anzeigeeinheit dazu ausgestattet den aktuellen Schwenkwinkel der Adaptionsvorrichtung und/oder den aktuellen Hundegangwinkel der Hundeganglenkung textuell darzustellen.

Durch eine textuelle Darstellung ist eine genauere Angabe möglich als mit einer rein grafischen Darstellung.

Die Erfindung umfasst ferner ein Landwirtschaftliches Arbeitsfahrzeug mit einer Anzeigeeinheit, wobei das Arbeitsfahrzeug eine schwenkbare Adaptionsvorrichtung umfasst, wobei die Anzeigeeinheit dazu ausgestattet ist im Anzeigefeld einen aktuellen Schwenkwinkel der Adaptionsvorrichtung zu visualisieren, wobei das Arbeitsfahrzeug mit einer Hundeganglenkung ausgestattet ist, wobei die Anzeigeeinheit dazu ausgestattet ist im Anzeigefeld einen möglichen Schwenkbereich der Adaptionsvorrichtung in Abhängigkeit vom aktuellen Hundegangwinkel der Hundeganglenkung zu visualisieren

Die Anzeigeeinheit ist dabei vorzugsweise in der Fahrerkabine des Arbeitsfahrzeugs angeordnet. Die Anzeigeeinheit ist kommunikativ direkt oder indirekt mit zumindest einem Sensor des Arbeitsfahrzeugs verbunden, wobei der Sensor dazu ausgelegt und in der Lage ist den Schwenkwinkel der Adaptionsvorrichtung zu erfassen.

Die Adaptionsvorrichtung kann dabei an der Vorderseite oder an der Rückseite des Arbeitsfahrzeugs angebracht sein.

In einer bevorzugten Ausführungsform kann der maximale Hundegangwinkel der Hundeganglenkung auf einen begrenzten Hundegangwinkel eingeschränkt werden, wobei der begrenzte Hundegangwinkel kleiner ist als der maximale Schwenkwinkel der Adaptionsvorrichtung.

Durch die Begrenzung des Hundegangwinkels wird die Wahrscheinlichkeit für ein Überdrehen der Adaptionsvorrichtung und eine Beschädigung vermindert.

In einer bevorzugten Ausführungsform ist das Arbeitsfahrzeug dazu eingerichtet zu erkennen ob ein Anbaugerät an der Adaptionsvorrichtung montiert ist, wobei der maximale Hundegangwinkel automatisch eingeschränkt wird, wenn an der Adaptionsvorrichtung ein Anbaugerät erkannt wird.

Wenn ein Anbaugerät an der Adaptionsvorrichtung montiert ist, ist eine Beschädigungswahrscheinlichkeit im Allgemeinen erhöht. Durch die automatische Einschränkung des Hundegangwinkels wird die Beschädigungswahrscheinlichkeit vermindert. Die Erkennung eines an der Adaptionsvorrichtung montierten Anbaugerätes kann über verschiedene Sensoren erfolgen. Häufig werden Anbaugeräte kommunikativ mit dem Arbeitsfahrzeug verbunden. Über die Kommunikation kann das montierte Anbaugerät erkannt werden. Alternativ oder zusätzlich kann eine Kamera am Arbeitsfahrzeug das an der Adaptionsvorrichtung montierte Anbaugerät erfassen und über eine Bilderkennung das Anbaugerät erkannt werden.

In einer bevorzugten Ausführungsform ist das Arbeitsfahrzeug dazu eingerichtet zu erkennen ob ein freilaufendes Anbaugerät an der Adaptionsvorrichtung montiert ist, wobei der maximale Hundegangwinkel automatisch eingeschränkt wird, wenn an der Adaptionsvorrichtung ein freilaufendes Anbaugerät erkannt wird.

Ein freilaufendes Anbaugerät ist dadurch gekennzeichnet, dass es vom Arbeitsfahrzeug gezogen wird und der Schwenkwinkel der Adaptionsvorrichtung durch das Anbaugerät bestimmt wird. Bspw. folgt ein freilaufendes Anbaugerät dem Arbeitsfahrzeug verzögert durch eine Kurve. Bei der Einfahrt in eine Kurve steigt der Schwenkwinkel dadurch sukzessive an bis der Schwenkwinkel dem Lenkwinkel gleicht. Bei der Geradeausfahrt ist der Schwenkwinkel gewöhnlich gleich dem Hundegangwinkel. Bei einer Kurveneinfahrt mit eingeschlagener Hundeganglenkung kann daher ein freilaufendes Anbaugerät die Adaptionsvorrichtung über den möglichen Schwenkbereich drehen und beschädigen. Durch die Begrenzung des Hundegangwinkels wird die Wahrscheinlichkeit einer Beschädigung vermindert. Das Gegenteil eines freilaufenden Anbaugerätes ist ein fest montiertes Anbaugerät. Bei einem fest montierten Anbaugerät ist der Schwenkwinkel fest eingestellt.

In einer bevorzugten Ausführungsform ist das Arbeitsfahrzeug dazu eingerichtet zu erkennen ob ein Anbaugerät an der Adaptionsvorrichtung montiert ist, das Arbeitsfahrzeug eine Empfehlung an den Nutzer ausgibt den maximalen Hundegangwinkel einzuschränken, wenn an der Adaptionsvorrichtung ein Anbaugerät erkannt wird.

Durch die Ausgabe einer Empfehlung wird dem Nutzer die Möglichkeit gegeben selber zu entscheiden ob eine Einschränkung des Hundegangwinkels erfolgen soll. Die Empfehlung kann bspw. visuell auf dem Anzeigefeld der Anzeigevorrichtung dargestellt werden. Alternativ oder zusätzlich kann die Empfehlung akustisch über einen Lautsprecher in der Fahrerkabine ausgegeben werden.

In einer bevorzugten Ausführungsform ist das Arbeitsfahrzeug dazu eingerichtet ob ein freilaufendes Anbaugerät an der Adaptionsvorrichtung montiert ist, das Arbeitsfahrzeug eine Empfehlung an den Nutzer ausgibt den maximalen Hundegangwinkel einzuschränken, wenn an der Adaptionsvorrichtung ein freilaufendes Anbaugerät erkannt wird.

Insbesondere bei freilaufenden Anbaugeräten ist eine Einschränkung des Hundegangwinkels sinnvoll. Daher ist eine Empfehlung besonders sinnvoll, wenn ein freilaufendes Anbaugerät an der Adaptionsvorrichtung montiert ist.

Im Folgenden wird die Erfindung an einem Ausführungsbeispiel näher erläutert. Dabei zeigt:
Figuren 1a bis 1d verschiedene erfindungsgemäße Anzeigefelder,
Fig 2 ein erfindungsgemäßes Arbeitsfahrzeug.

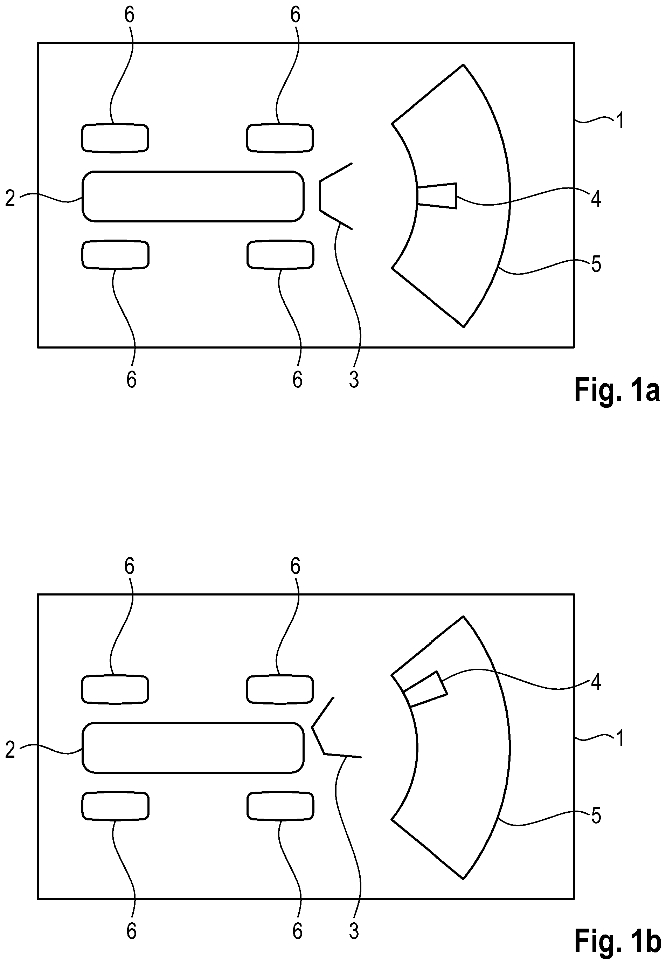

Bevorzugt wird die Darstellung des Anzeigefeldes in regelmäßigen Abständen, besonders bevorzugt in Echtzeit, an den aktuellen Hundegangwinkel und den aktuellen Schwenkwinkel angepasst. In den Figuren 1a bis 1d werden beispielhaft vier Darstelllungen erläutert.

In Fig 1a ist ein erfindungsgemäßes Anzeigefeld 1 dargestellt. Visualisiert wird ein landwirtschaftliches Arbeitsfahrzeug 2 mit 4 Rädern 6 und einer Adaptionsvorrichtung 3. Der Hundegangwinkel wird visualisiert durch die Ausrichtung der Räder 6 im Verhältnis zum Fahrgestell des landwirtschaftlichen Arbeitsfahrzeugs 2. In diesem Beispiel beträgt der Hundegangwinkel 0°, Räder 6 und Farhgestell stehen also parallel zueinander. Der aktuelle Schwenkwinkel 4 der Adaptionsvorrichtung 3 wird sowohl durch die Ausrichtung der Adaptionsvorrichtung 3 im Verhältnis zur Fahrtrichtung des landwirtschaftlichen Arbeitsfahrzeugs 2 als auch zusätzlich durch einen Keil visualisiert. Durch den Keil kann der Fahrer den aktuellen Schwenkwinkel 4 wesentlich leichter erkennen als nur durch die direkte Visualisierung. Alternativ könnte der aktuelle Schwenkwinkel als Strich visualisiert werden. Durch einen Strich kann der Schwenkwinkel genauer visualisiert werden, dafür lässt sich ein Keil vom Bediener leichter erfassen. In diesem Beispiel beträgt der aktuelle Schwenkwinkel 0°. Der Keil, der den aktuellen Schwenkwinkel 4 der Adaptionsvorrichtung 3 visualisiert ist einen einen Kreisausschnitt eingebettet, der den möglichen Schwenkbereich 5 der Adaptionsvorrichtung visualisiert. Da der Hundegangwinkel in diesem Beispiel 0° beträgt ist der mögliche Schwenkbereich 5 der Adaptionsvorrichtung 3 symmetrisch und beträgt in diesem Beispiel zu jeder Seite 15°.

In einer alternativen Ausführungsform kann der mögliche Schwenkbereich innerhalb eins größeren Kreisausschnitts visualisiert werden. Dabei visualisiert der geößere Kreisausschnitt den möglichen Schwenkbereich, der sich durch Änderung des Hundegangwinkels erreichen lässt. Innerhalb des größeren Kreisausschnitts kann dann der beim aktuellen Hundegangwinkel mögliche Schwenkbereich hervorgehoben werden. Eine solche Hervorhebung ist bspw. durch eine Einfärbung möglich. Durch diese Ausführungsform erkannt der Fahrer sehr leicht welcher Schwenkbereich durch eine Änderung des Hundegangwinkels möglich ist.

In Figur 1b ist ein weites erfindungsgemäßes Anzeigefeld 1 dargestellt. Im Folgenden werden nur die Unterschiede zu Figur 1a erläutert. Der aktuelle Schwenkwinkel 4 der Adaptionsvorrichtung 3 beträgt in diesem Beispiel 10° nach rechts bezogen auf die Fahrtrichtung des Arbeitsfahrzeugs 2. Der aktuelle Schwenkwinkel 4 der Adaptionsvorrichtung 3 wird sowohl durch die Ausrichtung der Adaptionsvorrichtung 3 im Verhältnis zur Fahrtrichtung des landwirtschaftlichen Arbeitsfahrzeugs 2 als auch zusätzlich durch den Keil innerhalb des Kreisausschnitts visualisiert. Der Fahrer erkennt durch die Visualisierung schnell und einfach, dass die Nutzung der Hundeganglenkung mit einem Hundegangwinkel nach rechts nur sehr begrenzt möglich ist.

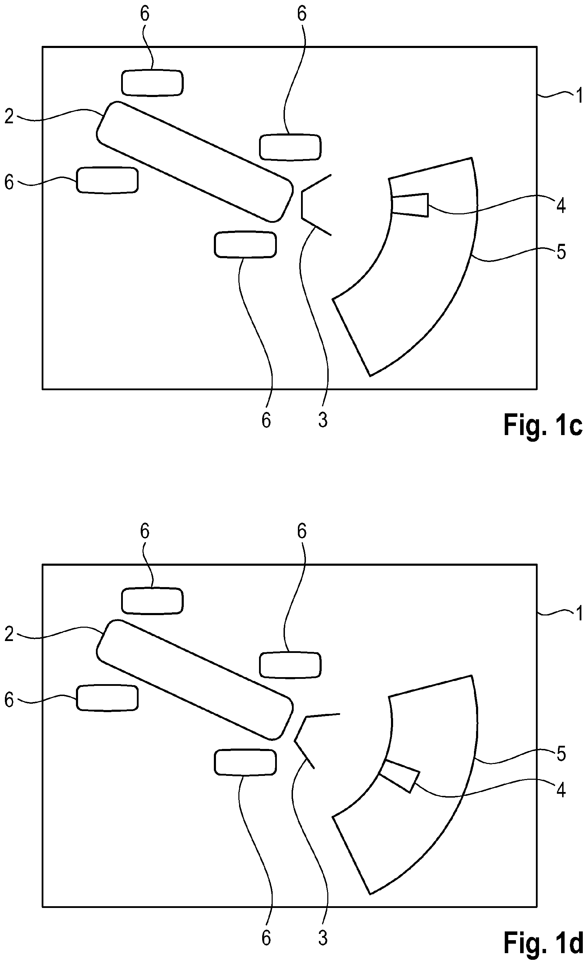

In Figur 1c ist ein weites erfindungsgemäßes Anzeigefeld 1 dargestellt. Im Folgenden werden nur die Unterschiede zu Figur 1a erläutert. Der Hundegangwinkel ist in diesem Beispiel auf 12° nach rechts eingestellt. Visualisiert wird der Hundegangwinkel durch die Ausrichtung des Arbeitsfahrzeugs 2 und der Ausrichtung der Räder 6. Die Adaptionsvorrichtung 3 ist in diesem Beispiel um 5° nach links bezogen auf die Fahrtrichtung geschwenkt. Entsprechend ergibt sich ein Winkel von 10° zwischen der Ausrichtung der Arbeitsmaschine 2 und der Adaptionsvorrichtung 3. Die Ausrichtung der Räder 6 visualisiert die Fahrrichtung der Arbeitsmaschine 2. Der mögliche Schwenkbereich 5 der Adaptionsvorrichtung beträgt jeweils 15° bezogen auf die Ausrichtung der Arbeitsmaschine 2. Durch den Hundegangwinkel von 12° verschiebt sich der mögliche Schwenkbereich auf 27° nach links und 3° nach rechts. Der mögliche Schwenkbereich 5 wird in diesem Beispiel als Kreisausschnitt visualisiert. Der aktuelle Schwenkwinkel 4 wird in diesem Beispiel innerhalb des Kreisausschnitts als Keil dargestellt.

Entscheidet der Fahrer sich nun für eine Rechtskurve, so kann ein freilaufendes Anbaugerät nur bis zu einem Lenkwinkel von 3° folgen und schwere Schäden an Fahrzeug und Anbaugerät sind möglich. Durch die Anzeige erkennt der Fahrer, dass nur ein kleiner Lenkwinkel möglich ist und kann einen anderen Fahrweg wählen oder den Hundegangwinkel ändern.

In Figur 1d ist ein weites erfindungsgemäßes Anzeigefeld 1 dargestellt. Im Folgenden werden nur die Unterschiede zu Figur 1a erläutert. Der Hundegangwinkel ist in diesem Beispiel auf 12° nach rechts eingestellt. Die Adaptionsvorrichtung 3 ist in diesem Beispiel um 12° nach links bezogen auf die Fahrtrichtung geschwenkt. Durch die gegensinnige Verschwenkung befindet sich der aktuelle Schwenkwinkel 4 der Adaptionsvorrichtung 3 mittig im möglichen Schwenkbereich 5. Der Faherer erkennt so, dass keine Gefahr einer Beschädigung besteht und Lenkmanöver oder Verschwenkungen der Adaptionsvorrichtung möglich sind.

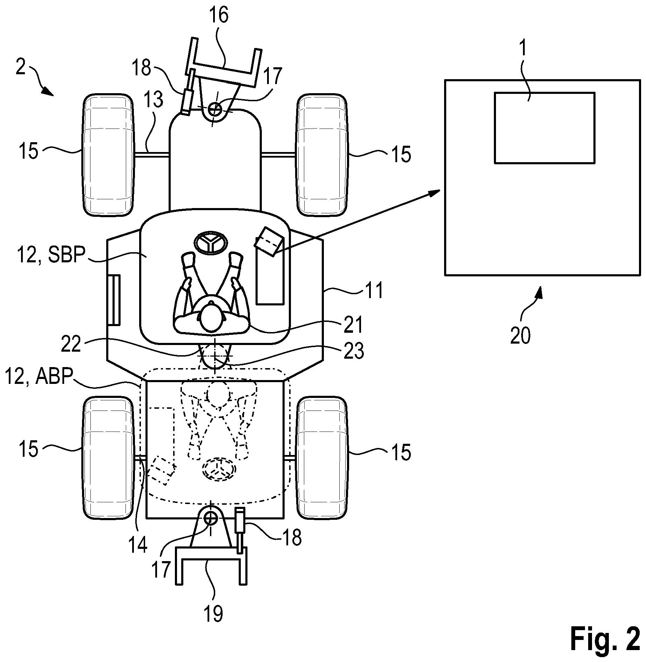

Das in Fig. 2 als landwirtschaftliches Arbeitsfahrzeug 2 ausgeführte Fahrzeug zeigt ein Fahrgestell 11, auf dem eine Fahrerkabine 12 angebracht ist. Das Fahrgestell 11 wird von einer vorderen Achseineinheit 13 und einer hinteren Achseinheit getragen. Endseitig sind der vorderen und der hinteren Achseinheit 13, 14 jeweils gleichgroße Räder 15 zugeordnet. Frontseitig ist dem Arbeitsfahrzeug 2 eine als Frontschwenkkraftheber 16 ausgeführte Adaptionsvorrichtung 3 zugeordnet, zur Aufnahme eines hier nicht näher dargestellten Anbaugerätes. Um den Gelenkpunkt 17 ist der Frontschwenkkraftheber 16 jeweils links- und rechtsseitig verschwenkbar. Zur Beeinflussung der Verschwenkung und zum positionsgenauen Arretieren des Frontschwenkkrafthebers 16 ist zwischen Fahrgestell 11 und dem Frontschwenkkraftheber 16 ein seitlich als Kolbenzylinder 18 ausgeführtes Verstellelement vorhanden. Demgegenüber weist das landwirtschaftliche Arbeitsfahrzeug 2 heckseitig gleichfalls eine als Heckschwenkkraftheber 19 ausgeführte Adaptionsvorrichtung 3 auf. Gleichfalls ist zum links- und rechtsseitigen Verschwenken und Arretieren des Heckschwenkkrafthebers 19 diesem ein seitlich mit dem Fahrgestell 11 angelenkt verbundenes als Kolbzylinder 18 ausgeführtes Verstellelement zugeordnet.

Die Fahrerkabine 12 befindet sich in einer Straßenbetriebsposition SBP in etwa mittig zwischen der vorderen Achseinheit 13 und der hinteren Achseinheit 14, wobei der Blick des Bedieners 21 beim Steuern in Richtung der vorderen Achseinheit 13 gerichtet ist. Die Fahrerkabine 12 ist auf einer nicht näher dargestellten Schwenkvorrichtung 22 angebracht, die um eine vertikale Drehachse 23 horizontal schwenkbar ist. Der Fahrerkabine 12 ist eine im dargestellten Beispiel als LCD-Monitor 20 ausgeführte Anzeigeneinheit zugeordnet. Die Anzeigeeinheit 20 umfasst ein Anzeigefeld 1, deren Darstellung in den Figuren 1a bis 1d gezeigt ist. Es versteht sich, dass die Visualisierung um die Visualisierung des aktuellen Schwenkwinkels und des Schwenkbereichs des Frontschwenkkrafthebers 16 erweitert werden kann.

Im dargestellten Beispiel kann die Fahrerkabine 12 nun von der Straßenbetriebsposition SBP mittels der Schwenkvorrichtung 22 horizontal um eine vertikale Drehachse 23 um 180° in eine Arbeitsbetriebsposition ABP verschwenkt werden, so dass dann der Blick des Bedieners 21 beim Steuern des Arbeitsfahrzeuges 2 in Richtung der hinteren Achseinheit 14 gerichtet ist, wobei jedoch auch im Fall, dass die Fahrerkabine 12 die Straßenbetriebsposition SBP einnimmt, sich das Arbeitsfahrzeug 2 auch im Arbeitsbetrieb befinden kann.

### Bezugszeichenliste

- **1**: **Anzeigefeld**
- **2**: **Arbeitsfahrzeug**
- **3**: **Adaptionsvorrichtung**
- **4**: **Schwenkwinkel**
- **5**: **Schwenkbereich**
- **6**: **Rad**
- **11**: **Fahrgestell**
- **12**: **Fahrerkabine**
- **13**: **Vordere Achseinheit**
- **14**: **Hintere Achseinheit**
- **15**: **Rad**
- **16**: **Frontschwenkkraftheber**
- **17**: **Vertikale Drehachse**
- **18**: **Kolbenzylinder**
- **19**: **Heckschwenkkraftheber**
- **20**: **Anzeigeeinheit**
- **21**: **Bediener**
- **22**: **Schwenkvorrichtung**
- **23**: **Vertikale Drehachse**

## Patentansprüche

1. Anzeigeeinheit mit Anzeigefeld (1) zur Visualisierung von Fahrzeuginformationen für den Einsatz in landwirtschaftlichen Arbeitsfahrzeugen (2),
wobei das Arbeitsfahrzeug (2) eine schwenkbare Adaptionsvorrichtung (3) umfasst,
wobei die Anzeigeeinheit dazu ausgestattet ist im Anzeigefeld (1) einen aktuellen Schwenkwinkel (4) der Adaptionsvorrichtung (3) zu visualisieren,
**dadurch gekennzeichnet, dass** das Arbeitsfahrzeug (2) mit einer Hundeganglenkung ausgestattet ist,
wobei die Anzeigeeinheit dazu ausgestattet ist im Anzeigefeld (1) einen möglichen Schwenkbereich (5) der Adaptionsvorrichtung (3) in Abhängigkeit vom aktuellen Hundegangwinkel der Hundeganglenkung zu visualisieren.

2. Anzeigeeinheit nach Anspruch 1, **dadurch gekennzeichnet, dass** die Adaptionsvorrichtung (3) als Schwenkkraftheber ausgeführt ist.

3. Anzeigeeinheit nach einem der vorhergehenden Ansprüche, **dadurch gekennzeichnet, dass** die Anzeigeeinheit dazu ausgestattet ist im Anzeigefeld (1) den aktuellen Hundegangwinkel der Hundeganglenkung zu visualisieren.

4. Anzeigeeinheit nach einem der vorhergehenden Ansprüche, **dadurch gekennzeichnet, dass** der aktuelle Schwenkwinkel (4) der Adaptionsvorrichtung (3) und/oder der aktuelle Hundegangwinkel der Hundeganglenkung textuell dargestellt wird.

5. Landwirtschaftliches Arbeitsfahrzeug (2) mit einer Anzeigeeinheit,
wobei das Arbeitsfahrzeug (2) eine schwenkbare Adaptionsvorrichtung (3) umfasst,
wobei die Anzeigeeinheit dazu ausgestattet ist im Anzeigefeld (1) einen aktuellen Schwenkwinkel (4) der Adaptionsvorrichtung (3) zu visualisieren,
**dadurch gekennzeichnet, dass** das Arbeitsfahrzeug (2) mit einer Hundeganglenkung ausgestattet ist,
wobei die Anzeigeeinheit dazu ausgestattet ist im Anzeigefeld (1) einen möglichen Schwenkbereich (5) der Adaptionsvorrichtung (3) in Abhängigkeit vom aktuellen Hundegangwinkel der Hundeganglenkung zu visualisieren.

6. Landwirtschaftliches Arbeitsfahrzeug nach Anspruch 5, **dadurch gekennzeichnet, dass** der maximale Hundegangwinkel der Hundeganglenkung auf einen begrenzten Hundegangwinkel eingeschränkt werden kann, wobei der begrenzte Hundegangwinkel kleiner ist als der maximale Schwenkwinkel der Adaptionsvorrichtung (3).

7. Landwirtschaftliches Arbeitsfahrzeug nach Anspruch 6, **dadurch gekennzeichnet, dass** das Arbeitsfahrzeug (2) dazu eingerichtet ist zu erkennen ob ein Anbaugerät an der Adaptionsvorrichtung (3) montiert ist, wobei der maximale Hundegangwinkel automatisch eingeschränkt wird, wenn an der Adaptionsvorrichtung (3) ein Anbaugerät erkannt wird.

8. Landwirtschaftliches Arbeitsfahrzeug nach Anspruch 6, **dadurch gekennzeichnet, dass** das Arbeitsfahrzeug (2) dazu eingerichtet ist zu erkennen ob ein freilaufendes Anbaugerät an der Adaptionsvorrichtung (3) montiert ist, wobei der maximale Hundegangwinkel automatisch eingeschränkt wird, wenn an der Adaptionsvorrichtung (3) ein freilaufendes Anbaugerät erkannt wird.

9. Landwirtschaftliches Arbeitsfahrzeug nach Anspruch 6, **dadurch gekennzeichnet, dass** das Arbeitsfahrzeug (2) dazu eingerichtet ist zu erkennen ob ein Anbaugerät an der Adaptionsvorrichtung (3) montiert ist, das Arbeitsfahrzeug eine Empfehlung an den Nutzer ausgibt den maximalen Hundegangwinkel einzuschränken, wenn an der Adaptionsvorrichtung (3) ein Anbaugerät erkannt wird.

10. Landwirtschaftliches Arbeitsfahrzeug nach Anspruch 6, **dadurch gekennzeichnet, dass** das Arbeitsfahrzeug (2) dazu eingerichtet ist zu erkennen ob ein freilaufendes Anbaugerät an der Adaptionsvorrichtung (3) montiert ist, das Arbeitsfahrzeug eine Empfehlung an den Nutzer ausgibt den maximalen Hundegangwinkel einzuschränken, wenn an der Adaptionsvorrichtung (3) ein freilaufendes Anbaugerät erkannt wird.

## Claims

1. A display unit with a display field (1) for the visualisation of vehicle information for use in agricultural working vehicles (2),
wherein the working vehicle (2) comprises a pivotable adaptation device (3),
wherein the display unit is designed to visualise a current pivot angle (4) of the adaptation device (3) in the display field (1),
**characterized in that** the working vehicle (2) is equipped with a crab steering system,
wherein the display unit is designed to visualise a possible pivot range (5) of the adaptation device (3) in the display field (1) as a function of the current crab steering angle of the crab steering system.

2. The display unit according to claim 1, **characterized in that** the adaptation device (3) is configured as a swing power lift.

3. The display unit according to one of the preceding claims,
**characterized in that** the display unit is designed to visualise the current crab steering angle of the crab steering system in the display field (1).

4. The display unit according to one of the preceding claims,
**characterized in that** the current pivot angle (4) of the adaptation device (3) and/or the current crab steering angle of the crab steering system is portrayed textually.

5. An agricultural working vehicle (2) with a display unit,
wherein the working vehicle (2) comprises a pivotable adaptation device (3),
wherein the display unit is designed to visualise a current pivot angle (4) of the adaptation device (3) in the display field (1),
**characterized in that** the working vehicle (2) is equipped with a crab steering system,
wherein the display unit is designed to visualise a possible pivot range (5) of the adaptation device (3) in the display field (1) as a function of the current crab steering angle of the crab steering system.

6. The agricultural working vehicle according to claim 5,
**characterized in that** the maximum crab steering angle of the crab steering system can be restricted to a limited crab steering angle, wherein the limited crab steering angle is smaller than the maximum pivot angle of the adaptation device (3).

7. The agricultural working vehicle according to claim 6,
**characterized in that** the working vehicle (2) is configured to detect whether an implement is mounted on the adaptation device (3), wherein the maximum crab steering angle is automatically restricted when an implement is detected on the adaptation device (3).

8. The agricultural working vehicle according to claim 6,
**characterized in that** the working vehicle (2) is configured to detect whether a free-running implement is mounted on the adaptation device (3), wherein the maximum crab steering angle is automatically restricted when a free-running implement is detected on the adaptation device (3).

9. The agricultural working vehicle according to claim 6,
**characterized in that** the working vehicle (2) is configured to detect whether an implement is mounted on the adaptation device (3), the working vehicle issuing a recommendation to the user to restrict the maximum crab steering angle when an implement is detected on the adaptation device (3).

10. The agricultural working vehicle according to claim 6,
**characterized in that** the working vehicle (2) is configured to detect whether a free-running implement is mounted on the adaptation device (3), the working vehicle issuing a recommendation to the user to restrict the maximum crab steering angle when a free-running implement is detected on the adaptation device (3).

## Revendications

1. Unité d'affichage comprenant un champ d'affichage (1) pour la visualisation d'informations de véhicule en vue de l'utilisation dans des véhicules de travail (2) agricoles,
le véhicule de travail (2) comportant un dispositif d'adaptation (3) pivotant,
l'unité d'affichage étant équipée pour visualiser dans le champ d'affichage (1) un angle de pivotement (4) momentané du dispositif d'adaptation (3),
**caractérisée en ce que** le véhicule de travail (2) est doté d'une direction à marche en crabe,
l'unité d'affichage étant équipée pour visualiser dans le champ d'affichage (1) une plage de pivotement (5) possible du dispositif d'adaptation (3), en fonction de l'angle de marche en crabe momentané de la direction à marche en crabe.

2. Unité d'affichage selon la revendication 1, **caractérisée en ce que** le dispositif d'adaptation (3) est réalisé sous forme de relevage pivotant.

3. Unité d'affichage selon l'une des revendications précédentes, **caractérisée en ce que** l'unité d'affichage est équipée pour visualiser dans le champ d'affichage (1) l'angle de marche en crabe momentané de la direction à marche en crabe.

4. Unité d'affichage selon l'une des revendications précédentes, **caractérisée en ce que** l'angle de pivotement (4) momentané du dispositif d'adaptation (3) et/ou l'angle de marche en crabe momentané de la direction à marche en crabe est représenté sous forme de texte.

5. Véhicule de travail (2) agricole, comprenant une unité d'affichage,
le véhicule de travail (2) comportant un dispositif d'adaptation (3) susceptible de pivoter,
l'unité d'affichage étant équipée pour visualiser dans le champ d'affichage (1) un angle de pivotement (4) momentané du dispositif d'adaptation (3),
**caractérisé en ce que** le véhicule de travail (2) est doté d'une direction à marche en crabe,
l'unité d'affichage étant équipée pour visualiser dans le champ d'affichage (1) une plage de pivotement (5) possible du dispositif d'adaptation (3), en fonction de l'angle de marche en crabe momentané de la direction à marche en crabe.

6. Véhicule de travail agricole selon la revendication 5, **caractérisé en ce que** l'angle de marche en crabe maximal de la direction à marche en crabe peut être restreint à un angle de marche en crabe limité, ledit angle de marche en crabe limité étant inférieur à l'angle de pivotement maximal du dispositif d'adaptation (3).

7. Véhicule de travail agricole selon la revendication 6, **caractérisé en ce que** le véhicule de travail (2) est équipé pour détecter si un outil porté est monté sur le dispositif d'adaptation (3), l'angle de marche en crabe maximal étant limité automatiquement, si un outil porté est détecté sur le dispositif d'adaptation (3).

8. Véhicule de travail agricole selon la revendication 6, **caractérisé en ce que** le véhicule de travail (2) est équipé pour détecter si un outil semi-porté est monté sur le dispositif d'adaptation (3), l'angle de marche en crabe maximal étant limité automatiquement, si un outil semi-porté est détecté sur le dispositif d'adaptation (3).

9. Véhicule de travail agricole selon la revendication 6, **caractérisé en ce que** le véhicule de travail (2) est équipé pour détecter si un outil porté est monté sur le dispositif d'adaptation (3), le véhicule de travail émettant une recommandation pour l'utilisateur, aux fins de limiter l'angle de marche en crabe maximal, si un outil porté est détecté sur le dispositif d'adaptation (3).

10. Véhicule de travail agricole selon la revendication 6, **caractérisé en ce que** le véhicule de travail (2) est équipé pour détecter si un outil semi-porté est monté sur le dispositif d'adaptation (3), le véhicule de travail émettant une recommandation pour l'utilisateur, aux fins de limiter l'angle de marche en crabe maximal, si un outil semi-porté est détecté sur le dispositif d'adaptation (3).
